(19) Europäisches Patentamt
European Patent Office
Office européen des brevets

(11) Veröffentlichungsnummer: **0 190 586**
**A1**

# (12) EUROPÄISCHE PATENTANMELDUNG

(21) Anmeldenummer: **86100603.9**

(22) Anmeldetag: **17.01.86**

(51) Int. Cl.⁴: **C 09 B 44/02**
C 09 B 43/16, D 21 H 3/80

(30) Priorität: **30.01.85 DE 3502927**

(43) Veröffentlichungstag der Anmeldung:
**13.08.86 Patentblatt 86/33**

(84) Benannte Vertragsstaaten:
**CH DE FR GB LI**

(71) Anmelder: **BAYER AG**
**Konzernverwaltung RP Patentabteilung**
**D-5090 Leverkusen 1 Bayerwerk(DE)**

(72) Erfinder: **Kunde, Klaus, Dr.**
**Uppersberg 45**
**D-5090 Leverkusen(DE)**

(72) Erfinder: **Petzelt, Norbert, Dipl.-Ing.**
**Sudetenstrasse 4**
**D-5650 Solingen(DE)**

## (54) Triazinfarbstoffe, ihre Herstellung und Verwendung.

(57) Farbstoffe der Formel

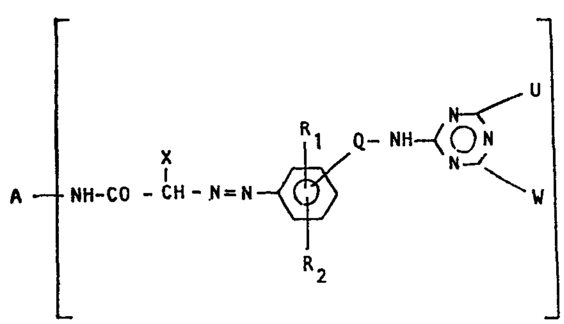

(1)

worin

U and W 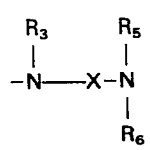 oder

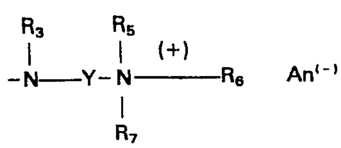 ,

Q eine direkte Bindung oder ein Brückenglied,

X $-COCH_3$, $-CN$, $-COOCH_3$, $-COOC_2H_5$, $-CONH_2$, $-COC_6H_5$ oder $-CON(R_3)-Y-N(R_5R_6R_7)^{(+)}An^{(-)}$

A 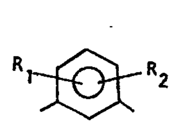 oder 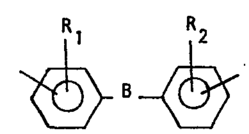

$R_1$ und $R_2$ Wasserstoff oder ein nichtionischer Substituent,

$R_3$ Wasserstoff, $C_1$-$C_4$-Alkyl oder β- und γ -$C_2$-$C_4$-Hydroxyalkyl,

$R_5$ - $R_7$ Wasserstoff, $C_1$-$C_4$-Alkyl oder $C_2$-$C_4$-Alkyl, das durch Hydroxy, Amino, $C_1$-$C_4$-Alkylamino, Di-$C_1$-$C_4$-alkylamino oder Tri-$C_1$-$C_4$-alkylammonium substituiert ist, Phenyl oder Benzyl, die durch Methyl substituiert sein können, sind oder

$R_5$ und $R_6$ zusammen mit dem Stickstoff einen gegebenenfalls substituierten Heterocyclus, oder

Y, $R_3$ und $R_5$ zusammen mit den jeweiligen Stickstoffatomen einen Piperazinring bilden, oder

$R_5$, $R_6$ und $R_7$ zusammen mit dem Stickstoff ein gegebenenfalls substituiertes Pyridinium bilden,

Y eine direkte Bindung oder ein Brückenglied,

./...

EP 0 190 586 A1

B O, S, NH, $CH_2$, $C_2H_4$, CH=CH, N=N oder O
|
N=N

und
$An^{(-)}$ ein Anion sind,
eignen sich vorzugsweise zum Färben von Papier.

BAYER AKTIENGESELLSCHAFT 5090 Leverkusen, Bayerwerk

Konzernverwaltung RP
Patentabteilung Mi/m-c

## Triazinfarbstoffe, ihre Herstellung und Verwendung

Die Erfindung betrifft Farbstoffe der allgemeinen Formel

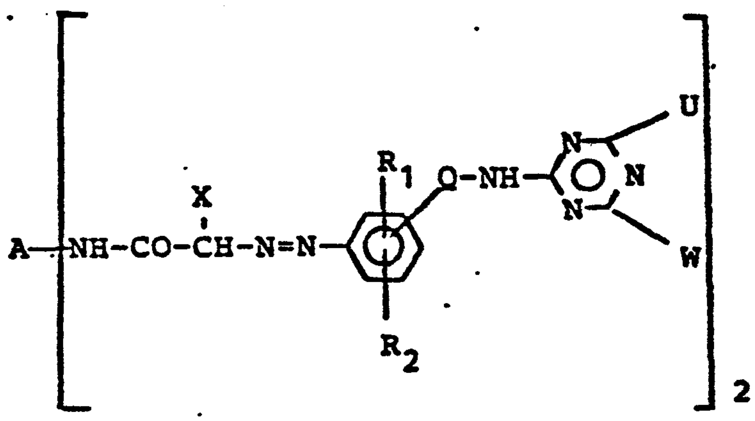

(I)

worin

U und W unabhängig voneinander Reste der Formeln

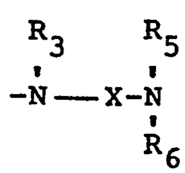

oder

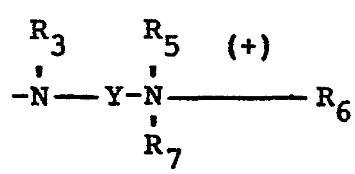

$An^{(-)}$ ,

Q eine direkte Bindung oder ein Brückenglied,

X ein Rest der Formel $-COCH_3$, $-CN$, $-COOCH_3$, $-COOC_2H_5$, $-CONH_2$, $-COC_6H_5$ oder $-CON(R_3)-Y-N(R_5R_6R_7)^{(+)}\ An^{(-)}$,

A einen Rest der Formel

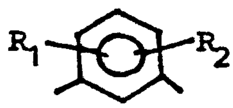

oder

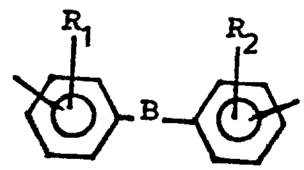

$R_1$ und $R_2$ unabhängig voneinander Wasserstoff oder ein nichtionischer Substituent,

$R_3$ Wasserstoff, $C_1$-$C_4$-Alkyl oder ß- und $\gamma$-$C_2$-$C_4$-Hydroxyalkyl,

$R_5$ - $R_7$ unabhängig voneinander Wasserstoff, $C_1$-$C_4$-Alkyl oder $C_2$-$C_4$-Alkyl, das durch Hydroxy, Amino, $C_1$-$C_4$-Alkylamino, Di-$C_1$-$C_4$-alkyl-amino oder Tri-$C_1$-$C_4$-alkyl-ammonium substituiert ist, Phenyl oder Benzyl, die durch Methylsubstituiert sein können, sind oder

$R_5$ und $R_6$ zusammen mit dem Stickstoff einen gegebenenfalls substituierten fünf- oder sechsgliedrigen Heterocyclus oder

Y, $R_3$ und $R_5$ zusammen mit den Stickstoffatomen einen Piperazinring bilden, oder

$R_5$, $R_6$ und $R_7$ zusammen mit dem Stickstoff ein gegebenenfalls substituiertes Pyridinium bilden,

Y eine direkte Bindung oder ein Brückenglied,

B O, S, NH, $CH_2$, $C_2H_4$, CH=CH, N=N oder $\overset{O}{N}=N$ und

An $^{(-)}$ ein Anion sind,

sowie ein Verfahren zu ihrer Herstellung, dadurch gekennzeichnet, daß man ein Cyanurhalogenid in beliebiger Reihenfolge und in der üblichen Weise mit den Verbindungen II und/oder III sowie IV

$$HN(R_3)-Y-NR_5R_6 \qquad (II)$$

$$[HN(R_3)-Y-NR_5R_6R_7]^{(+)}\ An^{(-)} \qquad (III)$$

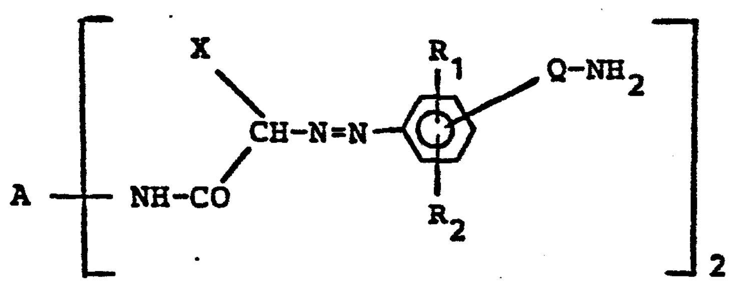

(IV)

wobei

A, Q, X, Y, Z, $R_1$-$R_{10}$ und $An^{(-)}$ die oben angegebene Bedeutung besitzen,

in vorzugsweise äquimolaren Mengen umsetzt, oder daß man ein Amin der allgemeinen Formel

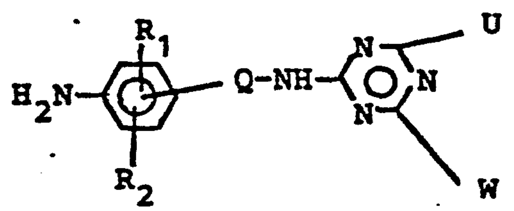

(V)

diazotiert und mit vorzugsweise einer äquimolaren Menge einer Kupplungskomponente der allgemeinen Formel

$$[X-CH_2-CO-NH]_2 A \qquad VI$$

wobei

A, Q, X, Y, Z, $R_1$-$R_{10}$ und $An^{(-)}$ die oben angegebene Bedeutung besitzen,

kuppelt. Die Herstellung durch Kupplung wird vorzugsweise so durchgeführt, daß man ohne Isolierung der Farbstoffe konzentrierte verkaufsfertige Lösungen mit einem Farbstoffgehalt von mindestens 10 %

erhält. Die Kupplung verläuft in diesem Fall in Wasser in Gegenwart von organischen Säuren und gegebenenfalls weiteren organischen Lösungsmitteln bei pH-Werten von $\leq 5$.

Außerdem betrifft die Erfindung die Verwendung der Farbstoffe der Formel I zum Färben von synthetischen und natürlichen kationisch anfärbbaren Materialien, insbesondere Papier.

Als Brückenglied Q sind beispielsweise die Reste

-CO-NH 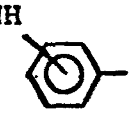 und -NH-CO 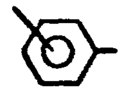

zu nennen, wobei der Benzolring mit der NH-Gruppe der Formel I verbunden ist.

Die Brückenglieder Y und Z stehen z.B. für $C_2$-$C_5$-Alkylen, $C_5$-$C_7$-Oxaalkylen, Phenylen oder Benzylen.

Als nichtionische Substituenten $R_1$ und $R_2$ sind beispielsweise Halogen, insbesondere Chlor oder Brom, $C_1$-$C_4$-Alkyl oder $C_1$-$C_4$-Alkoxy zu nennen.

$R_5$ und $R_6$ bzw. $R_8$ und $R_9$ können zusammen mit dem Stickstoff z.B. einen gegebenenfalls durch Methyl substituierten Pyrrolidin-, Morpholin-, Piperazin- oder Piperidinring bilden.

$R_5$, $R_6$ und $R_7$ bzw. $R_8$, $R_9$ und $R_{10}$ bilden zusammen mit den Stickstoff vorzugsweise Pyridinium oder Picolinium.

Von den Farbstoffen der Formel I sind die Farbstoffe der Formel

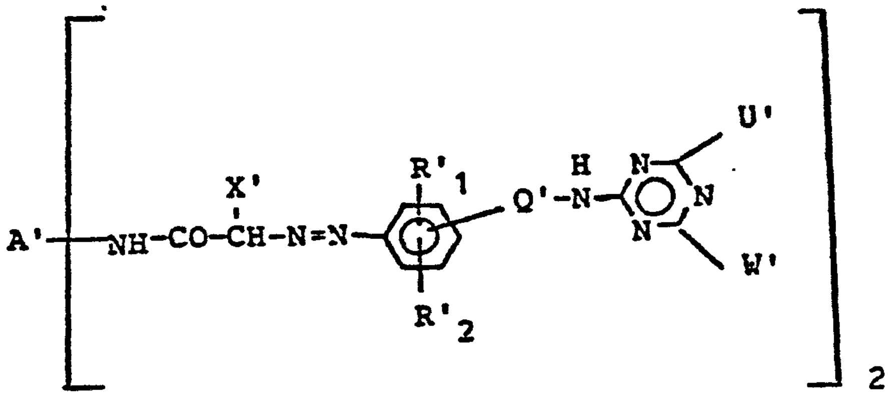

(VII)

bevorzugt, worin

U' und W' unabhängig voneinander Reste der Formeln

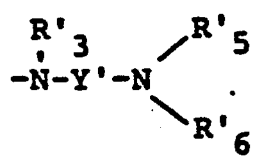

oder

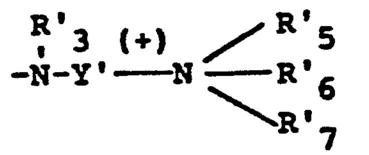

An$^{(-)}$

Q' eine direkte Bindung oder ein Rest p-$NHCOC_6H_4$- oder p-$CONHC_6H_4$-,

X' ein Rest der Formel $-COCH_3$, -CN, $-COOCH_3$, $-COOC_2H_5$, $-CONH_2$, $-COC_6H_5$ oder $-CON(R'_3)-Y'-N(R'_5R'_6R'_7)^{(+)}$ An$^{(-)}$,

A' ein Rest der Formel

0190386

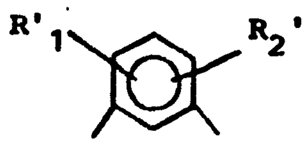

$R'_1$ und $R'_2$ unabhängig voneinander H, Cl, Br, $-OCH_3$, $-OC_2H_5$, $-CH_3$ oder $-C_2H_5$,

$R'_3$ Wasserstoff, $C_1$-$C_4$-Alkyl, ß- oder $-C_2$-$C_4$-Hydroxylalkyl,

$R'_5$-$R'_7$ unabhängig voneinander Wasserstoff, $C_1$-$C_4$-Alkyl, ß- oder $\gamma$-$C_2$-$C_4$-Hydroxyalkyl, ß- oder $\gamma$-$C_2$-$C_4$-Aminoalkyl, ß- oder $\gamma$-$C_2$-$C_4$-(N-$C_1$-$C_4$-Alkylamino)-alkyl, ß- oder $\gamma$-$C_2$-$C_4$-(N,N-di-$C_1$-$C_4$-alkylamino)-alkyl, ß- oder $\gamma$-$C_2$-$C_4$-(N,N,N-tri-$C_1$-$C_4$-alkylammonium) -alkyl-, Phenyl oder Benzyl, die durch Methyl, Methoxy oder Halogen substituiert sein können, sind, oder

$R'_5$ und $R'_6$ zusammen mit dem Stickstoff einen Pyrrolidin-, Morpholin-, Piperazin- oder Piperidin-Ring oder

Y', $R'_3$ und $R'_5$ zusammen mit den Stickstoffatomen einen Piperazinring bilden,

$R'_5$, $R'_6$ und $R'_7$ zusammen mit dem Stickstoff Pyridinium sind, wobei diese Heterocyclen durch $C_1$-$C_4$-Alkyl substituiert sein können,

Y' eine direkte Bindung, $C_2$-$C_5$-Alkylen, $C_5$-$C_7$-Oxaalkylen, Phenylen oder Benzylen

und

$An^{(-)}$ ein Anion sind.

Von besonderem Wert sind Farbstoffe der Formeln

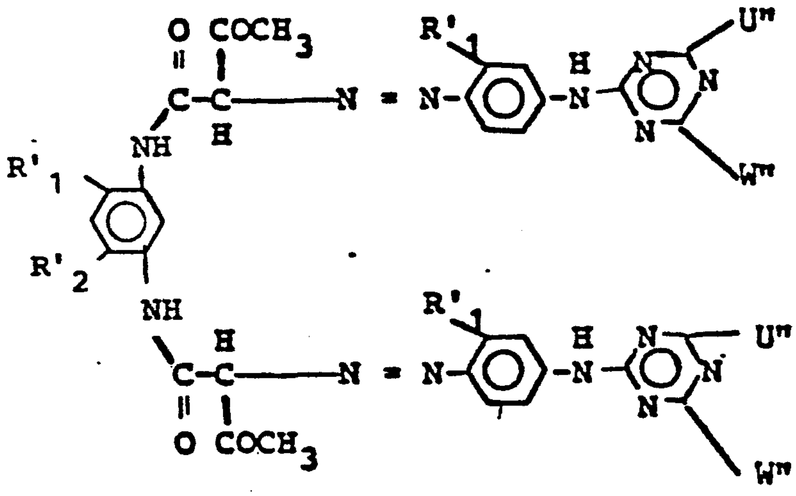

(VIII)

und

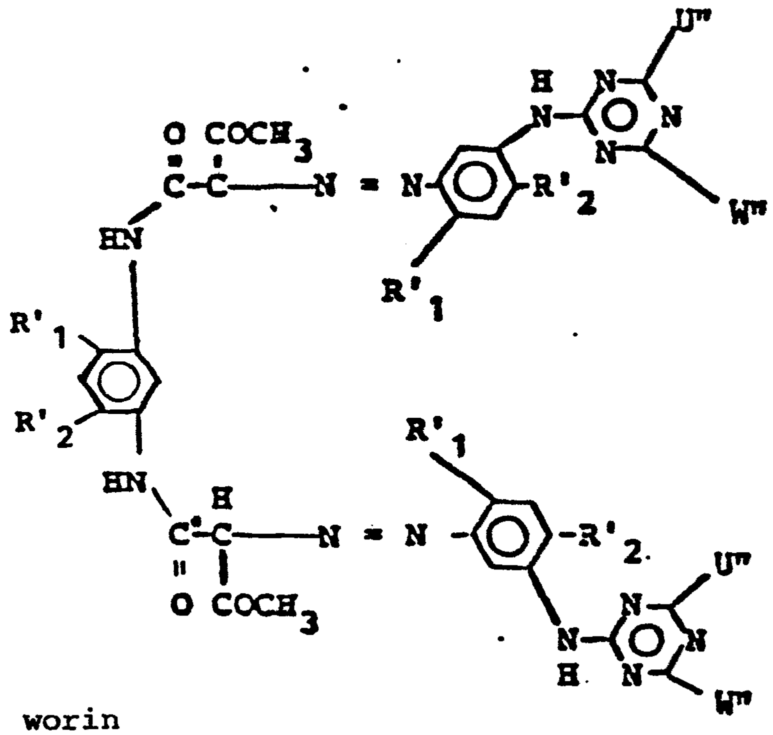

(IX)

worin

U" und W" unabhängig voneinander Reste der Formel

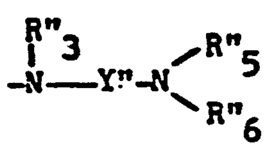 oder 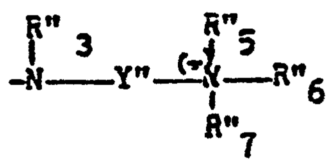 $An^{(-)}$.

| | |
|---|---|
| Y" | $C_2$-$C_4$-Alkylen, |
| $R"_3$ | Wasserstoff oder $C_1$-$C_4$-Alkyl und |
| $R"_5$-$R"_7$ | unabhängig voneinander Wasserstoff, $C_1$-$C_4$-Alkyl oder $C_2$-$C_4$-Alkyl, das durch Hydroxy, Amino, $C_1$-$C_4$-Alkylamino, Di-$C_1$-$C_4$-alkylamino oder Tri-$C_1$-$C_4$-alkyl-ammonium substituiert ist, sind oder |

$R"_5$ und $R"_6$ zusammen mit dem Stickstoff einen Pyrrolidin-, Morpholin-, Piperazin- oder Piperidin-Ring bilden, oder

Y", R"$_3$ und R"$_5$ zusammen mit den Stickstoffatomen einen Piperazinring bilden, und

R'$_1$, R'$_2$ und $An^{(-)}$ die in Formel (VII) angegebene Bedeutung besitzen.

Als Arylidkomponenten

$$NH_2\text{-}A\text{-}NH_2$$

werden z.B.

1,3-Diaminobenzol, 2-, 4- oder 5-Chlor-1,3-diaminobenzol, 2-, 4- oder 5-Methoxy-1,3-diaminobenzol, 2-, 4- oder 5-Methyl-1,3-diaminobenzol, 2,4-, 2,5- oder 4,6-Dichlor-1,3-diaminobenzol, 2,4-, 2,5- oder 4,6-Dimethoxy-1,3-diaminobenzol, 2,4-, 2,5- oder 4,6-Dimethyl-1,3-diaminobenzol eingesetzt.

Die β-Carbonylcarbonsäurearylide, die als Kupplungskomponenten verwendet werden, erhält man z.B., indem man die Diamine in an sich bekannter Weise mit einem der folgenden Reagentien umsetzt.

Diketen, Acetessigsäuremethylester, Acetessigsäureethylester, Cyanessigsäureethylester, Cyanessigsäuremethylester, Malonsäuredimethylester, Malonsäurediethylester, Malonsäuremonomethylesteramid, Malonsäuremonomethylesteriminoester, Benzoylessigsäuremethylester.

Die Aniline der Formel (V) erhält man z.B., indem man Nitroaniline nach der in der DE-A- 2 915 323 beschriebenen Methode umsetzt; als Reduktionsmethode kommt auch die Reduktion mit Natriumdithionit oder die katalytische Reduktion, z.B. mit Raney-Nickel, in Frage. Als Nitroaniline kommen z.B. in Betracht:

p-Nitranilin, m-Nitranilin, 4-Nitro-3-methylanilin, 3-Nitro-4-methylanilin, 4-Nitro-3-methoxyanilin, 3-Nitro-4-methoxyanilin, 3-Nitro-4-ethoxyanilin, 4-Nitro-3-ethoxyanilin, 4-Nitro-3-chloranilin, 4-Chlor-3-nitroanilin, 5-Nitro-2-methylanilin, 5-Nitro-2,4-dimethylanilin.

Als Amine (II), die durch Quaternierung in die Ammoniumverbindungen (III) überführt werden können, können z.B. folgende verwendet werden:

2-Dimethylaminoethylamin, 3-Dimethylaminopropylamin, 2-(2'-Dimethylaminoethoxy-)-ethylamin, 3-Morpholinopropylamin, 2-Diethylaminoethylamin, 3-Diethylaminopropylamin, 2-(Bis-ß-hydroxyethylamino)-ethylamin, 3-(Bis-ß-hydroxyethylamino)-propylamin, 4-Dimethylaminoanilin, 3-Dimethylaminoanilin, 4-Amino-dimethylbenzylamin, 3-Aminodimethylbenzylamin, 4-Amino-methylbenzylamin, 1,2-Diaminoethan, 1,2-Diaminopropan, 1,2-Diaminobutan, 1,4-Diaminobutan, 2-Methylamino-ethylamin, Methyl-2-aminopropylamin, Diethylentriamin, Bis-(3-aminopropyl)-amin, Bis-(3-aminopropyl)-methylamin, ß-Hydroxyethyl-piperazin, ß-Aminoethyl-piperazin.

Zur Überführung der tertiären Amine in die entsprechenden quartären Ammoniumionen kann man entweder eine organische oder Mineralsäure addieren oder mit einem Quaternierungsreagenz umsetzen, z.B. mit Methylchlorid, Methylbromid, Methyliodid, Benzolsulfonsäuremethylester, Ethylchlorid, Benzolsulfonsäureethylester, Dimethylsulfat und Diethylsulfat oder Ethylenoxid, Propylenoxid oder Butylenoxid in Gegenwart von Säuren.

Die Umsetzung mit dem Quaternierungsreagenz kann auch an anderer geeigneter Stelle des Syntheseweges erfolgen, z.B. als letzter Schritt nach der Kupplung.

Anstelle der Nitroaniline kann man auch die entsprechenden halbseitig geschützten Phenylendiamine verwenden, z.B. die Formylaminoaniline oder die Aminophenyloxamidsäuren, wobei man dann statt der Reduktion eine selektive Hydrolyse der Schutzgruppe vornehmen muß.

Ebensogut kann man auch in der üblichen Weise die geeigneten Nitroaniline oder Formylaminoaniline bzw. Aminophenyloxamid-Säuren in die entsprechenden ß-Carbonylcarbonsäurearylide überführen, diese mit einer der erfindungsgemäßen Diazoniumverbindung kuppeln und die Kupplungsprodukte selektiv reduzieren bzw. hydrolysieren; die entstandene Aminogruppe wird nun in üblicher Weise mit einem Cyanurhalogenid, dieses Produkt mit den erfindungsgemäßen Diaminen umgesetzt; schließlich wird wie oben angeführt die tetraquartäre Ammoniumverbindung hergestellt.

Die Farbstoffe können isoliert und getrocknet werden, sie können aber auch mit geeigneten Lösungsmitteln in stabile, konzentrierte Lösungen überführt werden.

Geeignete Lösungsmittel sind z.B. wäßrige Lösungen von Mineralsäuren und/oder organischen Säuren, z.B. Salzsäure, Schwefelsäure, Phosphorsäure, Ameisensäure, Essigsäure, Glykolsäure, Milchsäure, Methansulfonsäure.

Als Lösungsmittel können aber auch organische Lösungsmittel wie z.B. Ethylenglykol, Diglykol, Triglykol, Glycerin, Ethylglykolmonomethylester, Diglykolmonoethylether, Diglykolmonobutylether verwendet oder mitverwendet werden.

Die erfindungsgemäßen Farbstoffe, die basische Aminogruppen enthalten, werden vorzugsweise vor der Verwendung zum Färben durch Zugabe einer organischen oder Mineralsäure in die korrespondierenden Ammoniumverbindungen überführt.

Die erfindungsgemäßen kationischen Farbstoffe färben kationisch anfärbbare Materialien wie z.B. Polyacrylnitril, sauer modifizierten Polyester und Polyamid, Wolle und Leder, aber auch cellulosehaltige Materialien wie z.B. Baumwolle und Celluloseregenerat-Fasern, insbesondere Papier mit guten Echtheiten in gelben Tönen.

Die Farbstoffe können zum Papiermasse-Färben oder zur Papieroberflächenfärbung eingesetzt werden. Sie sind geeignet für geleimte und für ungeleimte Papiersorten ausgehend von gebleichtem oder ungebleichtem Zellstoff verschiedener Provenienz wie Nadel- oder Laubholz-Sulfit- und/oder -Sulfat-Zellstoff.

Das Färben erfolgt vorzugsweise bei pH-Werten von 4 bis 8, insbesondere pH 5 bis 7. Die Färbetemperatur beträgt im allgemeinen 10 bis 50°C, vorzugsweise etwa 20°C.

Die bei der Papierfärbung und -herstellung üblichen Hilfsmittel und Füllstoffe können beim Einsatz der erfindungsgemäßen Farbstoffe mitverwendet werden. Die Farbstoffe besitzen bei der Papierfärbung ein ausgezeichnetes Ziehvermögen.

Die mit den erfindungsgemäßen Farbstoffen erhaltenen Papierfärbungen zeichnen sich durch sehr gute Wasserechtheit (Ausblutechtheit) sowie Säure-, Alkali- und Alaun-Echtheit aus. Hervorzuheben ist auch die überraschend hohe Lichtechtheit der Papierfärbungen. Auch auf die Brillanz und Klarheit der Farbtöne ist hinzuweisen. Ferner ist das Kombinationsverhalten mit geeigneten Farbstoffen sehr gut.

Die Farbstoffe können auch zum Färben von Baumwolle und von Celluloseregenerat-Fasern eingesetzt werden, ohne daß die bisher üblichen Hilfsmittel wie z.B. die Tannin-Vorbehandlung angewendet werden müssen; auch auf die Zugabe von Salz kann verzichtet werden.

Das Färben erfolgt dann vorzugsweise bei pH-Werten von 4 bis 8, insbesondere bei pH 5 bis 7. Die Färbetemperatur beträgt im allgemeinen 60 bis 130°C, vorzugsweise 60 bis 100°C.

Beispiel A

92 g Cyanurchlorid werden in 750 ml Aceton gelöst und auf 0°C gekühlt. Nach Zugabe von 69 g p-Nitranilin tropft man innerhalb einer Stunde 130 ml einer 4n-Sodalösung zu und läßt noch eine Stunde nachrühren. Der bei Zugabe von 600 ml Eiswasser entstehende Niederschlag wird abgesaugt und in kleinen Portionen in 250 g 1,2-Diaminopropan eingetragen, wobei sich der Ansatz auf ca. 60°C erwärmt. Man rührt noch eine Stunde bei ca. 100°C nach, dann wird das überschüssige 1,2-Diaminopropan unter vermindertem Druck abdestilliert. Der Rückstand wird mit 500 ml Wasser und 174 g Natriumdithionit versetzt und unter Rühren 2 Stunden zum Sieden erhitzt. Nach dem Abkühlen auf 90°C wird mit conc. Salzsäure angesäuert (pH $< 1$) und nochmals eine Stunde zum Sieden erhitzt, um das Schwefeldioxid zu entfernen. Die Lösung wird heiß geklärt; sie enthält das Produkt der Formel a, das ohne Isolierung weiterverarbeitet wird.

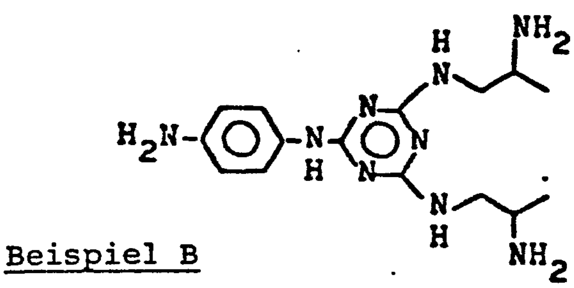

(a)

Beispiel B

Verwendet man statt des in Beispiel A eingesetzten p-Nitranilin eine äquimolare Menge m-Nitranilin, so erhält man eine Lösung des Produktes der Formel b

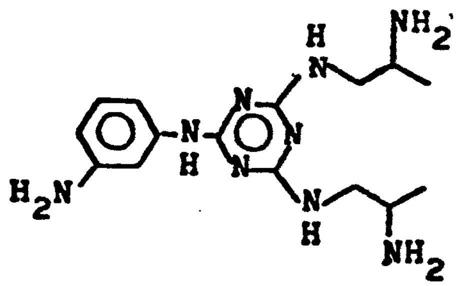

(b)

Beispiel C

92 g Cyanurchlorid werden in 750 ml Aceton gelöst und auf 0°C gekühlt. Nach Zugabe von 86 g 3-Nitro-4-methylanilin tropft man innerhalb einer Stunde 130 ml einer 4n-Sodalösung zu und läßt noch eine Stunde nachrühren. Der bei Zugabe von 600 ml Eiswasser entstehende Niederschlag wird abgesaugt und in kleinen Portionen in 500 ml N-ß-Aminoethylpiperazin eingetragen, wobei sich der Ansatz auf 90°C erhitzt. Man rührt noch eine Stunde bei ca. 100°C nach und gibt den Ansatz auf 1000 ml Eiswasser. Der Niederschlag wird abgesaugt, in 500 ml Wasser suspendiert und über Raney-Nickel hydriert. Nach Beendigung der Reduktion wird der Katalysator abfiltriert; die Lösung enthält das Produkt der Formel (c)

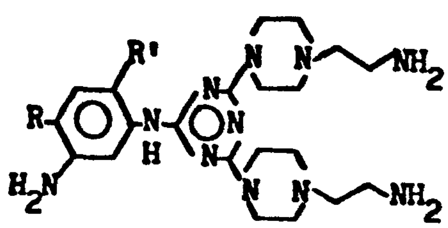

(c): R' = H, R = $CH_3$
(d): R' = $CH_3$, R = H
(e): R' = R = $CH_3$

Beispiele D und E

Verwendet man statt des in Beispiel C eingesetzten 3-Nitro-4-methylanilin äquimolare Mengen 3-Nitro-6-methyl-

0190586

anilin oder 3-Nitro-4,6-dimethylanilin, so erhält man Lösungen der Produkte (d) bzw. (e).

Beispiele F und G

Verwendet man statt des in Beispiel A eingesetzten 1,2-Diaminopropan die äquimolare Menge N-ß-Hydroxy- bzw. N-ß-Aminoethylpiperazin, so erhält man Lösungen der Produkte der Formeln (f) bzw. (g).

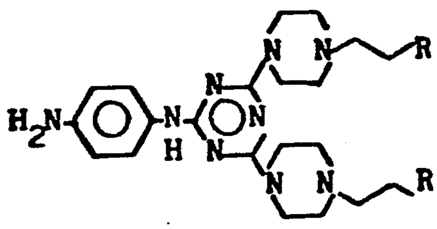

(f): R = -OH
(g): R = $-NH_2$

Beispiele H, I und J

Verwendet man statt des in den Beispielen C, D und E eingesetzten N-ß-Aminoethylpiperazin äquimolare Mengen N-ß-Hydroxyethylpiperazin, so erhält man Lösungen der Produkte (h), (i) und (j)

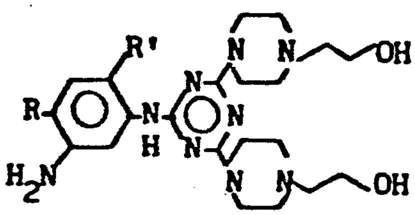

(h): R' = H, R = $CH_3$
(i): R' = $CH_3$, R = H
(j): R' = R = $CH_3$

Beispiele K - U

Die Amine K - U der folgenden Formel

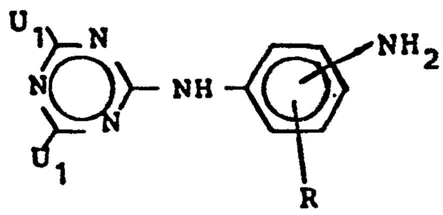

können ebenfalls entsprechend Beispiel C hergestellt werden.

| Verbindung | $U_1$ | R | NH in Position |
|---|---|---|---|
| K | $NH-(CH_2)_3-NH_2$ | 2-Cl | 4 |
| L | $HN-(CH_2)_3-N(C_2H_5)_2$ | 2-Br | 4 |
| M | $HN-(CH_2)_2-N(CH_3)_2$ | $2-CH_3O$ | 4 |
| N | $HN-(CH_2)_2-\overset{(+)}{N}(CH_3)_3$ $Cl^{(-)}$ | $4-CH_3-O$ | 3 |
| O | 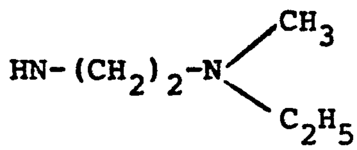 | 4-Cl | 3 |
| P | 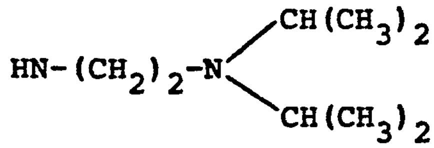 | $6-CH_3$ | 3 |
| Q | 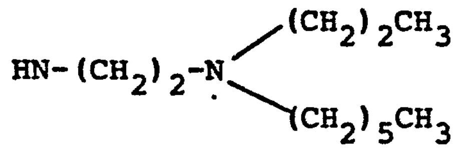 | $6-CH_3$ | 3 |
| R | 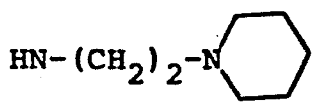 | $6-CH_3O$ | 3 |
| S | $\overset{CH_3}{N}-(CH_2)_4-N(C_2H_5)_2$ | $6-CH_3-O$ | 3 |
| T | $HN-(CH_2)_5-N(C_2H_5)_2$ | 5-Cl-2-$CH_3$-O | 3 |
| U | $HN-(CH_2)_3-N(CH_2CH_2OH)_2$ | 5-Cl-2-$CH_3$-O | 3 |

Beispiele V und W

Verwendet man statt des in Beispiel A eingesetzten 1,2-Diaminopropans eine äquivalente Menge 1,2-Diaminoethan bzw. N-(2-Aminoethyl)-methylpiperazin, so erhält man eine Lösung des Produkts der Formel (v) bzw. (w)

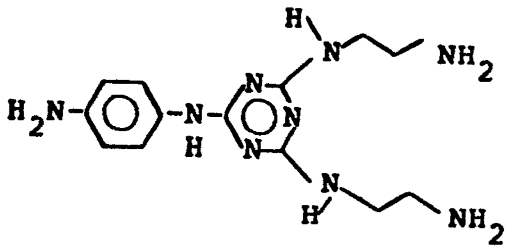

(v)

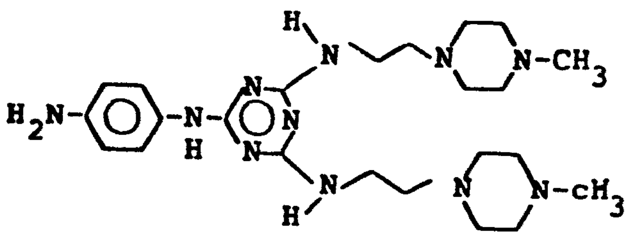

(w)

Beispiele X und Y

Verwendet man statt des in Beispiel B eingesetzten 1,2-Diaminopropan eine äquimolare Menge 3-Dimethylamino-1-aminopropan bzw. N-(2-Aminoethyl)-morpholin, so erhält man eine Lösung des Produktes der Formel (x) bzw. (y)

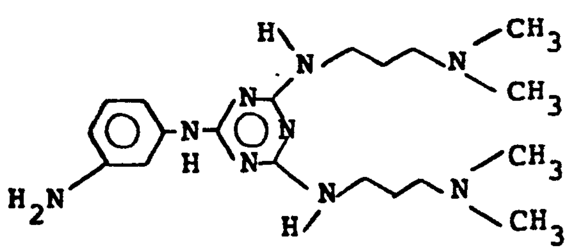

(x)

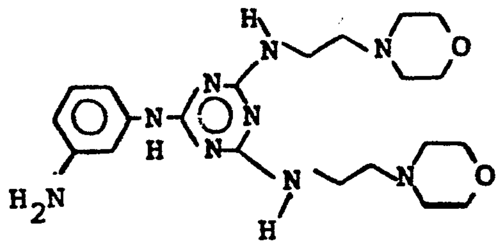

(y)

**Beispiel 1**

66 g des Zwischenprodukts aus Beispiel A (ca. 300 ml Lösung) werden mit 100 g Eis versetzt und mit 14 g Natriumnitrit diazotiert. 27,6 g Bis-acetoacetyl-m-phenylendiamin werden mit 8 g Natriumhydroxid in 300 ml Wasser gelöst; diese Lösung läßt man in die Lösung der Diazoniumverbindung eintropfen. Zur Vervollständigung der Kupplung wird der pH-Wert durch Zugabe von Natriumacetat auf ca. 4 gebracht, dann wird über Nacht gerührt. Der Farbstoff wird abgesaugt und in 200 ml Eisessig und 100 ml Wasser aufgelöst. Die so erhaltene Lösung färbt cellulosehaltige Materialien in gelben Tönen.

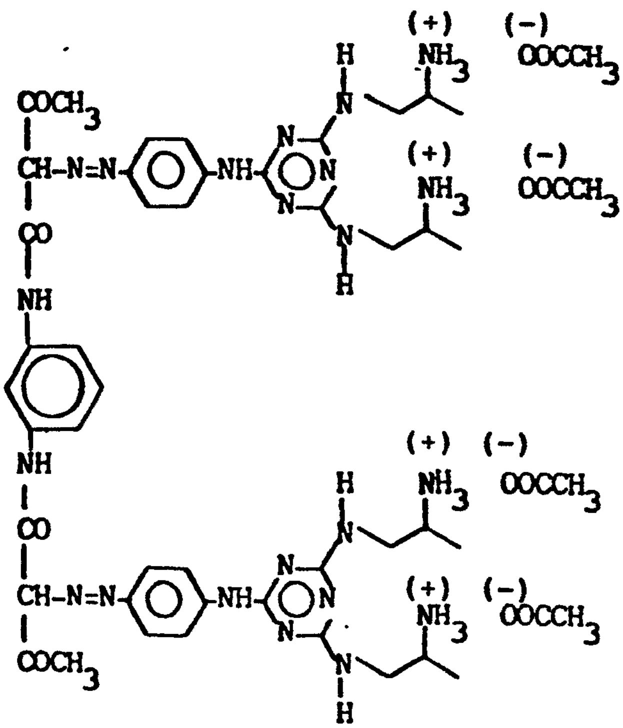

Beispiele 2 und 3

Verwendet man statt der in Beispiel 1 eingesetzten Kupplungskomponente äquimolare Mengen Bis-acetoacetyl-1-chlor-2,4-phenylendiamin bzw. Bis-acetoacetyl-4-methyl-1,3-phenylendiamin, so erhält man ebenfalls Lösungen gelber Farbstoffe.

Beispiele 4 - 15

Verwendet man statt des in Beispiel 1 eingesetzten Zwischenproduktes aus Beispiel A äquimolare Mengen der Zwischenprodukte aus den Beispielen B - E und die Kupplungskomponenten aus den Beispielen 1 - 3 und verfährt wie in Beispiel 1 angegeben, so erhält man Lösungen grünstichig gelber Farbstoffe.

| Bsp. | Zwischenprod. aus Bsp. | Bisacetoacetylderivat von |
|---|---|---|
| 4 | B | m-Phenylendiamin |
| 5 | C | m-Phenylendiamin |
| 6 | D | m-Phenylendiamin |
| 7 | E | m-Phenylendiamin |
| 8 | B | 1-Chlor-2,4-phenylendiamin |
| 9 | C | 1-Chlor-2,4-phenylendiamin |
| 10 | D | 1-Chlor-2,4-phenylendiamin |
| 11 | E | 1-Chlor-2,4-phenylendiamin |
| 12 | B | 4-Methyl-1,3-phenylendiamin |
| 13 | C | 4-Methyl-1,3-phenylendiamin |
| 14 | D | 4-Methyl-1,3-phenylendiamin |
| 15 | E | 4-Methyl-1,3-phenylendiamin |

Beispiele 16 - 30

Verwendet man statt des in Beispiel 1 eingesetzten Zwischenproduktes aus Beispiel A äquimolare Mengen der Zwischenprodukte aus den Beispielen F - J und die Kupplungskomponenten aus den Beispielen 1 - 3, so erhält man Lösungen gelber Farbstoffe.

| Bsp. | Zwischenprod. aus Bsp. | Bisacetoacetylderivat von |
|---|---|---|
| 16 | F | m-Phenylendiamin |
| 17 | G | m-Phenylendiamin |
| 18 | H | m-Phenylendiamin |
| 19 | I | m-Phenylendiamin |
| 20 | J | m-Phenylendiamin |
| 21 | F | 1-Chlor-2,4-phenylendiamin |
| 22 | G | 1-Chlor-2,4-phenylendiamin |
| 23 | H | 1-Chlor-2,4-phenylendiamin |
| 24 | I | 1-Chlor-2,4-phenylendiamin |
| 25 | J | 1-Chlor-2,4-phenylendiamin |
| 26 | F | 4-Methyl-1,3-phenylendiamin |
| 27 | G | 4-Methyl-1,3-phenylendiamin |
| 28 | H | 4-Methyl-1,3-phenylendiamin |
| 29 | I | 4-Methyl-1,3-phenylendiamin |
| 30 | J | 4-Methyl-1,3-phenylendiamin |

Beispiele 31 - 41

Verwendet man statt des in Beispiel 1 eingesetzten Zwischenproduktes aus Beispiel A äquimolare Mengen der Verbindungen K-U, so erhält man Lösungen gelber Farbstoffe.

Beispiele 42 - 45

Verwendet man statt des in Beispiel 1 eingesetzten Zwischenproduktes aus Beispiel A äquimolare Mengen des Zwischenproduktes aus Beispiel V, W, X oder Y, so erhält man ebenfalls Lösungen gelber Farbstoffe.

Beispiel 46

Die Paste des Kupplungsproduktes aus Beispiel 1 wird in 400 ml Wasser suspendiert, der pH-Wert dieser Suspension wird mit verdünnter Natronlauge auf ca. 10 gebracht. Dazu läßt man bei Raumtemperatur 37,8 g Dimethylsulfat langsam zutropfen; der pH-Wert wird durch Zugabe von verdünnter Natronlauge konstant gehalten. Wenn die Quaternierung beendet ist, wird der Ansatz zur Zerstörung des überschüssigen Dimethylsulfats auf 80° erhitzt. Man erhält eine stabile Lösung, die cellulosehaltige Materialien in grünstichig gelben Tönen färbt.

Beispiel 47

Die Lösung des Zwischenproduktes aus Beispiel A wird mit Natronlauge auf pH 14 gebracht, wobei sich die Diazokomponente als Öl abscheidet.

66 g dieses Öls werden in 100 g Methansulfonsäure und 700 ml Wasser gelöst und unter Außenkühlung bei 0° mit 14 g Natriumnitrit diazotiert. Nach Beendigung der Diazotierung werden 27,6 g Bis-acetoacetyl-m-phenylendiamin eingestreut, dann wird mit Trinatriumcitrat ein pH-Wert von 2 eingestellt. Nun erhitzt man die Mischung auf 60° und führt bei dieser Temperatur die Kupplung zu Ende. Man erhält eine stabile Lösung des Farbstoffs aus Beispiel 1 (mit Methansulfonat/Citrat anstelle von Acetat als Anion).

Beispiel 48

66 g der Diazokomponente aus Beispiel 43 werden in 90 g Methansulfonsäure, 350 ml Wasser und 350 ml Eisessig gelöst und bei 0° mit 14 g Natriumnitrit diazotiert. Nach Beendigung der Diazotierung werden 27,6 g Bis-acetoacetyl-m-phenylendiamin eingestreut, dann wird mit Natriumcitrat ein pH-Wert von 2 eingestellt. Man erhitzt die Mischung auf 60°C und führt bei dieser Temperatur die Kupplung zu Ende. Man erhält eine stabile Lösung des Farbstoffs aus Beispiel 1.

Beispiel 49

Die Lösung des Zwischenproduktes aus Beispiel 3 wird mit Natronlauge auf pH 14 gebracht, wobei sich die Diazokomponente als Öl abscheidet.

89,4 g dieses Öls werden mit 100 g Methansulfonsäure in 700 ml Wasser gelöst und unter Außenkühlung bei 0° mit 14 g Natriumnitrit diazotiert. Nach Beendigung der Diazotierung tropft man eine Lösung von 27,6 g Bis-acetoacetyl-m-phenylendiamin in 145 ml 40 %ige Natronlauge zu. Man

erhitzt die Mischung auf 60° und führt bei dieser Temperatur die Kupplung zu Ende. Der pH-Wert der Lösung fällt dabei von 2,5 auf 1,5. Man erhält eine stabile Lösung des Farbstoffs aus Beispiel 20 (mit Methansulfonat anstelle von Acetat als Anion).

Beispiel 50

Ein aus 60 % Holzschliff und 40 % ungebleichtem Sulfitzellstoff bestehender Trockenstoff wird im Holländer mit Wasser angeschlagen und bis zum Mahlgrad 40° SR gemahlen, so daß der Trockengehalt etwas über 2,5 % liegt. Anschließend wird mit Wasser auf 2,5 % Trockengehalt des Dickstoffs eingestellt.

200 Teile dieses Dickstoffs werden mit 5 Teilen einer 0,5 %igen essigsauer wäßrigen Lösung des Farbstoffs aus Beispiel 1 versetzt, ca. 5 Minuten verrührt, mit 2 % Harzleim und 3 % Alaun (bez. auf Trockenstoff) versetzt und wieder einige Minuten bis zur Homogenität verrührt. Man verdünnt die Masse nun mit ca. 500 Teilen Wasser und stellt hieraus in üblicher Weise durch Absaugen über einen Blattbildner Papierblätter her. Die Papierblätter weisen eine gelbe Färbung auf. Das Abwasser der Färbung ist praktisch farbstofffrei.

Beispiel 51

Verwendet man statt des in Beispiel 1 eingesetzten Farbstoffs den Farbstoff aus Beispiel 2, so erhält man ebenfalls gelb gefärbte Papierblätter und ein praktisch farbstofffreies Abwasser.

Beispiele 52 und 53

Auch beim Färben von ungebleichter Papiermasse unter sonst gleichen Färbebedingungen und bei der Verwendung von gebleichtem Sulfitzellstoff erhält man gelbe Papierfärbungen und praktisch farbstofffreie Abwässer.

Patentansprüche

1. Farbstoffe der Formel

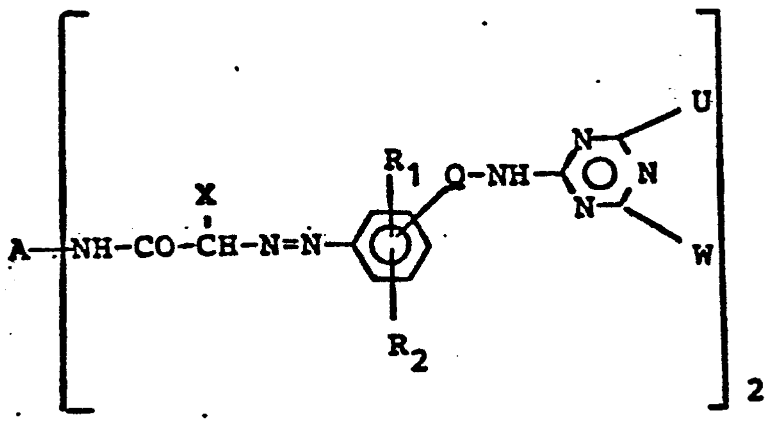

worin

U und W unabhängig voneinander Reste der Formel

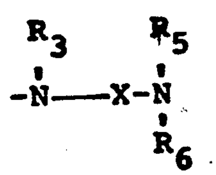

oder

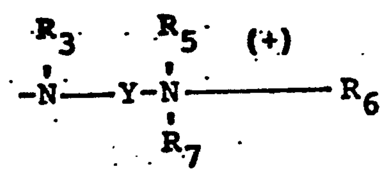

$An^{(-)}$,

Q eine direkte Bindung oder ein Brückenglied,

X einen Rest der Formel $-COCH_3$, $-CN$, $-COOCH_3$, $-COOC_2H_5$, $-CONH_2$, $COC_6H_5$ oder $-CON(R_3)-Y-N(R_5R_6R_7)^{(+)}$ $An^{(-)}$,

A einen Rest der Formel

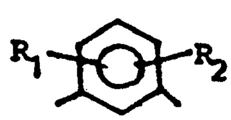

oder

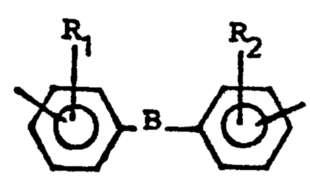

$R_1$ und $R_2$ unabhängig voneinander Wasserstoff oder ein nichtionischer Substituent,

$R_3$ Wasserstoff, $C_1$-$C_4$-Alkyl oder ß- und $\gamma$-$C_2$-$C_4$-Hydroxyalkyl,

$R_5$ - $R_7$ unabhängig voneinander Wasserstoff, $C_1$-$C_4$-Alkyl, oder $C_2$-$C_4$-Alkyl, das durch Hydroxy, Amino, $C_1$-$C_4$-Alkylamino, Di-$C_1$-$C_4$-alkyl-amino oder Tri-$C_1$-$C_4$-alkyl-ammonium substituiert ist, Phenyl oder Benzyl, die durch Methyl substituiert sein können, sind oder

$R_5$ und $R_6$ zusammen mit dem Stickstoff einen gegebenenfalls substituierten fünf- oder sechsgliedrigen Heterocyclus oder

Y, $R_3$ und $R_5$ zusammen mit den Stickstoffatomen einen Piperazinring bilden, oder

$R_5$, $R_6$ und $R_7$ zusammen mit dem Stickstoff ein gegebenenfalls substituiertes Pyridinium bilden,

Y eine direkte Bindung oder ein Brückenglied,

B O, S, NH, $CH_2$, $C_2H_4$, CH=CH, N=N oder $\overset{O}{\overset{\uparrow}{N{=}N}}$

und

$An^{(-)}$ ein Anion sind.

2. Farbstoffe der Formel

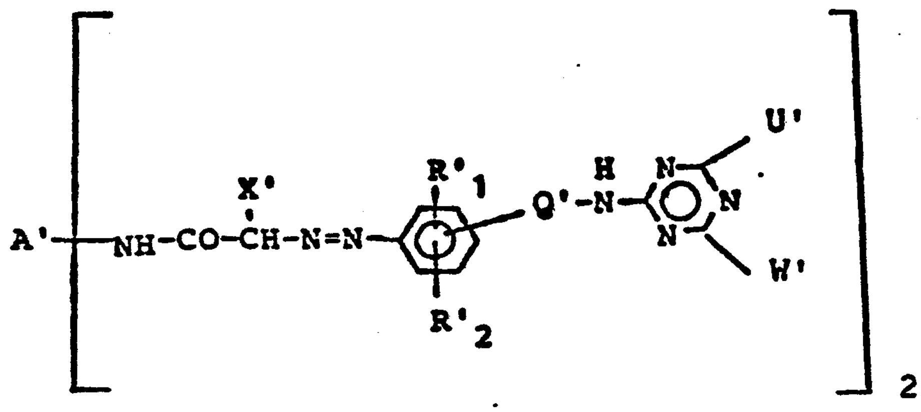

worin

U' und W' unabhängig voneinander Reste der Formeln

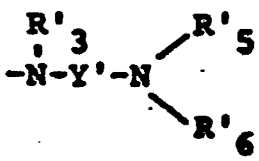 oder 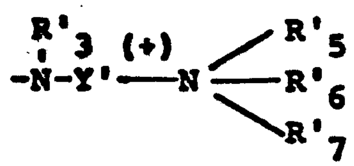 $An^{(-)}$

Q' eine direkte Bindung oder ein Rest p-$NHCOC_6H_4$- oder p-$CONHC_6H_4$-,

X' ein Rest der Formel $-COCH_3$, $-CN$, $-COOCH_3$, $-COOC_2H_5$, $-CONH_2$, $-COC_6H_5$ oder $-CON(R'_3)-Y'-N(R'_5R'_6R'_7)^{(+)}$ $An^{(-)}$,

A' ein Rest der Formel

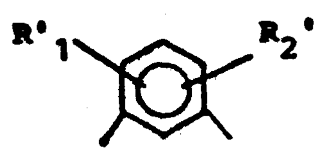

$R'_1$ und $R'_2$ unabhängig voneinander H, Cl, Br, $-OCH_3$, $-OC_2H_5$, $-CH_3$ oder $-C_2H_5$,

$R'_3$ Wasserstoff, $C_1$-$C_4$-Alkyl, ß- oder γ-$C_2$-$C_4$-Hydroxyalkyl,

$R'_5$-$R'_7$ unabhängig voneinander Wasserstoff, $C_1$-$C_4$-Alkyl, ß- oder γ-$C_2$-$C_4$-Hydroxyalkyl, ß- oder γ-$C_2$-$C_4$-Aminoalkyl, ß- oder γ-$C_2$-$C_4$-(N-$C_1$-$C_4$-Alkylamino)-alkyl, ß- oder γ-$C_2$-$C_4$-(N,N-di-$C_1$-$C_4$-alkylamino)-alkyl, ß- oder γ-$C_2$-$C_4$-(N,N,N-tri-$C_1$-$C_4$-alkylammonium)-alkyl, Phenyl oder Benzyl, die durch Methyl, Methoxy oder Halogen substituiert sein können, sind, oder

$R'_5$ und $R'_6$ zusammen mit dem Stickstoffatom einen Pyrrolidin-, Morpholin-, Piperazin- oder Piperidin-Ring oder

Y', $R'_3$ und $R'_5$ zusammen mit den Stickstoffatomen einen Piperazinring bilden,

$R'_5$, $R'_6$ und $R'_7$ zusammen mit dem Stickstoff Pyridinium sind, wobei diese Heterocyclen durch $C_1$-$C_4$-Alkyl substituiert sein können,

Y' eine direkte Bindung, $C_2$-$C_5$-Alkylen, $C_5$-$C_7$-Oxaalkylen, Phenylen oder Benzylen

und

$An^{(-)}$ ein Anion sind.

3. Farbstoffe der Formeln

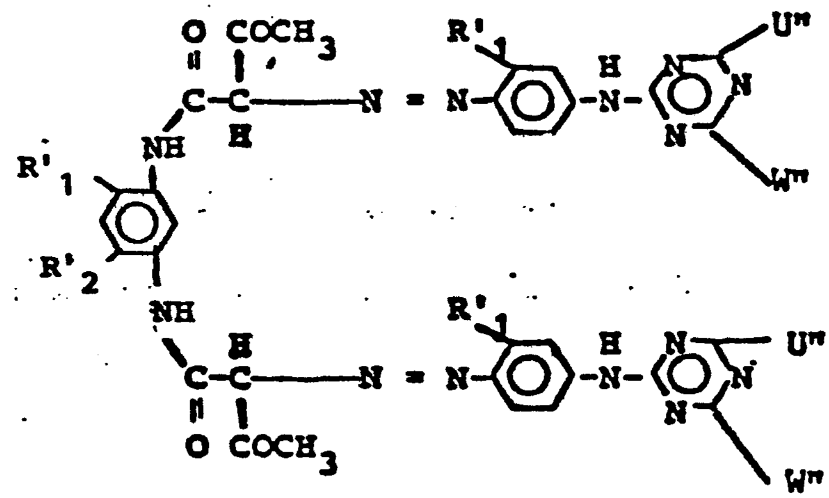

und

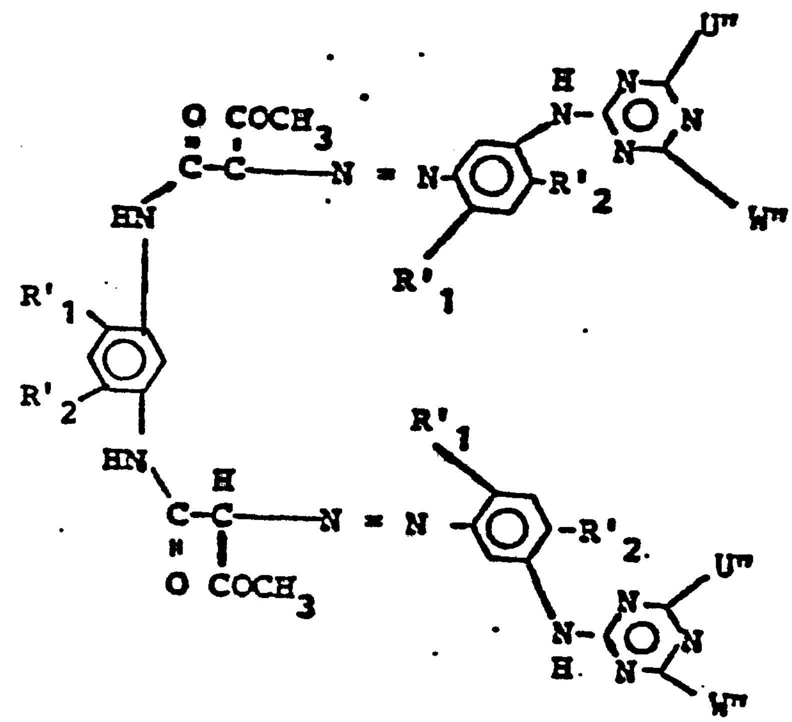

worin

U" und W" unabhängig voneinander Reste der Formeln

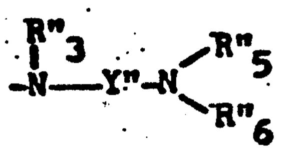 oder 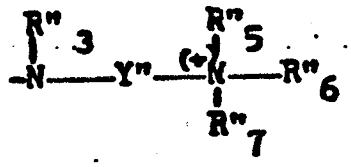 $An^{(-)}$

Y" $C_2$-$C_4$-Alkylen,

R"$_3$ Wasserstoff oder $C_1$-$C_4$-Alkyl und

R"$_5$-R"$_7$ unabhängig voneinander Wasserstoff, $C_1$-$C_4$-Alkyl oder $C_2$-$C_4$-Alkyl, das durch Hydroxy, Amino, $C_1$-$C_4$-Alkylamino, Di-$C_1$-$C_4$-alkylamino oder Tri-$C_1$-$C_4$-alkyl-ammonium substituiert ist, sind oder

R"$_5$ und R"$_6$ zusammen mit dem Stickstoff einen Pyrrolidin-, Morpholin-, Piperazin- oder Piperidin-Ring bilden oder

Y", R"$_3$ und R"$_5$ zusammen mit den Stickstoffatomen einen Piperazinring bilden, und

R'$_1$, R'$_2$ und $An^{(-)}$ die in Anspruch 2 angegebene Bedeutung besitzen.

4. Verfahren zur Herstellung von Farbstoffen gemäß Anspruch 1, dadurch gekennzeichnet, daß man ein Cyanurhalogenid in beliebiger Reihenfolge mit den Verbindungen der Formeln

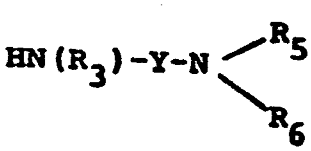 und/oder

$[HN(R_3)-Y-NR_5R_6R_7]^{(+)}$ $An^{(-)}$

und

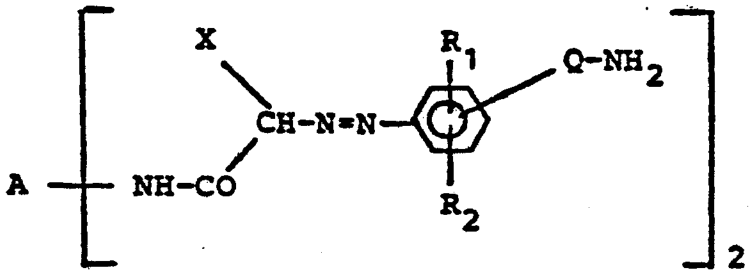

wobei

A,Q,X,Y,$R_1$-$R_3$,$R_5$-$R_7$ und $An^{(-)}$ die in Anspruch 1 angegebene Bedeutung besitzen, umsetzt.

5. Verfahren zur Herstellung von Farbstoffen gemäß Anspruch 1, dadurch gekennzeichnet, daß man ein Amin der Formel

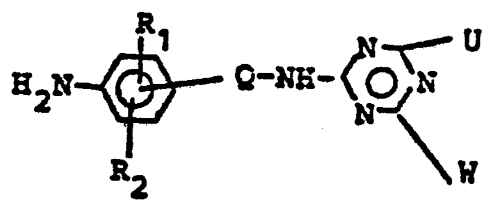

diazotiert und mit einer Kupplungskomponente der allgemeinen Formel

$$\left[X-CH_2-CO-NH\right]_2-A$$

wobei

$R_1$, $R_2$, Q, U, W, X und A die in Anspruch 1 angegebene Bedeutung haben, umsetzt.

6. Verfahren zum Färben von natürlichen und synthetischen kationisch anfärbbaren Substraten, dadurch gekennzeichnet, daß man Farbstoffe gemäß den Ansprüchen 1 - 3 verwendet.

7. Verfahren zur Herstellung von konzentrierten Lösungen von Farbstoffen gemäß Anspruch 1 nach dem Verfahren von Anspruch 5, dadurch gekennzeichnet, daß man die Kupplung in Wasser in Gegewart einer organischen Säure und gegebenenfalls weiterer organischer Lösungsmittel bei pH-Werten von $\leq$ 5 durchführt.

8. Verfahren zum Färben von Papier, dadurch gekennzeichnet, daß man Farbstoffe gemäß den Ansprüchen 1 - 3 verwendet.

9. Papier, gefärbt mit den Farbstoffen der Ansprüche 1 - 3.

Europäisches Patentamt

# EUROPÄISCHER RECHERCHENBERICHT

0190586

EP 86 10 0603

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
| A | EP-A-0 074 589 (BAYER)<br>* Ansprüche 1-9 *<br>----- | 1-9 | C 09 B 44/02<br>C 09 B 43/16<br>D 21 H 3/80 |
| | | | RECHERCHIERTE SACHGEBIETE (Int. Cl 4) |
| | | | C 09 B |

Der vorliegende Recherchenbericht wurde für alle Patentansprüche erstellt.

| Recherchenort | Abschlußdatum der Recherche | Prüfer |
|---|---|---|
| DEN HAAG | 12-05-1986 | GINESTET M.E.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82